# EUROPÄISCHE PATENTSCHRIFT

(11) **EP 2 093 014 B1**
(45) Veröffentlichungstag und Bekanntmachung des Hinweises auf die Patenterteilung: **01.12.2010**
(21) Anmeldenummer: 09153002.2
(22) Anmeldetag: 17.02.2009
(51) Int. Cl.: B23Q 1/03, B25B 11/00

(54) **Austauschbarer Adapter**
Exchangeable adapter
Adaptateur échangeable

(30) Priorität: 21.02.2008 DE 202008002364 U
(43) Veröffentlichungstag der Anmeldung: 26.08.2009
(73) Patentinhaber: Homag Holzbearbeitungssysteme AG, 72296 Schopfloch (DE)
(72) Erfinder: Sturm, Gotthilf, 72293 Glatten (DE); Calmbach, Martin, 72160 Horb-Dießen (DE)
(74) Vertreter: HOFFMANN EITLE

(56) Entgegenhaltungen:
- DE-A1- 4 221 222
- DE-A1- 10 162 862
- DE-U1- 20 206 489
- DE-U1-202004 014 939
- US-A1- 2002 070 491

## Beschreibung

### Gebiet der Erfindung

Die Erfindung betrifft Bearbeitungsmaschinen, insbesondere CNC-Maschinen, die bevorzugt plattenförmige Werkstücke aus Holz, Holzwerkstoffen, Kunststoffen oder dergleichen bearbeiten. Genauer gesagt betrifft die Erfindung einen Adapter, der zwischen eine Konsole und eine Werkstückhaltevorrichtung gesetzt werden kann.

### Stand der Technik

Gegenwärtig werden Werkstücke, die an einer CNC-Bearbeitungseinheit bearbeitet werden, von auf die Konsole gesetzten Werkstückhaltevorrichtungen, beispielsweise Saugern, gehalten. Die Bearbeitung erfolgt dann auf der den Saugern abgewandten Seite des Werkstücks und eventuell auch an dessen Rändern.

Da der Einsatz von so genannten Fünf-Achs-Bearbeitungsmaschinen ausgeweitet wird und die gehaltenen Werkstücke somit auch in einem Arbeitsgang von unten bearbeitet werden können, ergibt sich das Problem, dass zwischen der Bearbeitungsmaschine und/oder zwischen einer Konsole, auf die die Sauger gesetzt werden, und dem Werkstück nicht ausreichend Platz für eine Bearbeitung des Werkstücks mittels des Bearbeitungswerkzeugs vorhanden ist.

Der gegenwärtige Stand der Technik sieht vor, höhere Werkzeughalteeinheiten (Sauger) bereitzustellen, so dass das gehaltene Werkstück auch von unten bearbeitet werden kann. Ein gravierender Nachteil der hohen Sauger ist, dass diese aufgrund ihrer Größe instabil sind. Das führt dazu, dass das Werkstück während der Bearbeitung nicht ausreichend an der Bearbeitungsmaschine bzw. der Konsole der Bearbeitungsmaschine befestigt ist und verrutschen kann, was wiederum zu Beschädigungen am Werkstück führen würde. Außerdem ist die Herstellung von wenigen, in der Größe abgeänderten Werkstückhaltevorrichtungen kostspielig.

Es gibt im Stand der Technik ferner so genannte Schlitten, auf denen Sauger befestigt werden können. Diese Schlitten sind jedoch weder zum Austauschen gedacht, noch ermöglichen sie eine nennenswerte Höhenverschiebung der Werkstückhaltevorrichtungen. Vielmehr ist der Zweck dieser Schlitten, dass die Werkstückhaltevorrichtung beweglich auf der Konsole befestigt wird. Insofern müssen auch auf diesen Schlitten große Werkstückhaltevorrichtungen angebracht werden, damit die erforderliche Höhe für die Bearbeitung des Werkstücks mit einer Fünf-Achs-Maschine erreicht wird. Darüber hinaus müssen diese Schlitten gleitbar auf der Konsole befestigt sein.

Aus dem Dokument DE 101 62 862 A1 ist eine Vorrichtung zum Fixieren von Werkstücken bekannt, bei der Spannbalken auf Fahrschienen gelagert sind, und auf den Spannbalken wiederum Blocksauger vorgesehen sind.

Weiter ist das Dokument DE 20 2004 014 939 U1 bekannt, das eine Adapterplatte für Konsolentische einer Holzbearbeitungsmaschine betrifft. In der Betriebslage ist die Adapterplatte auf Konsolen unter Zwischenfügung von Blocksaugern aufgelagert.

### Darstellung der Erfindung

Aufgabe der Erfindung ist es, eine einfache, kostengünstige und flexible Möglichkeit bereitzustellen, vorhandene Bearbeitungsmaschinen umzurüsten. So kann eine größere Bandbreite an Bearbeitungen an Werkstücken durchgeführt werden.

Erfindungsgemäß wird diese Aufgabe einen austauschbaren Adapter nach Anspruch 1 sowie ein Verfahren zum Befestigen oder zum Austausch von Adaptern nach Anspruch 12 gelöst. Besonders bevorzugte Ausführungsformen der Erfindung sind in den jeweiligen Unteransprüchen enthalten.

Ein erfindungsgemäßer austauschbarer Adapter zum Anbringen einer Werkstückhaltevorrichtung an einer Konsole umfasst einen Hauptkörper, der zumindest in einem Ausmaß geringer als die Konsole sein kann, so dass die Konsole über den Hauptkörper hervorsteht. Ferner eine erste und zweite Verbindungsschnittstelle, mittels denen der Adapter auf der Konsole, bzw. die Werkstückhaltevorrichtung auf dem Adapter befestigt werden, wobei der Adapter die Werkstückhaltevorrichtung in eine andere, bevorzugt höhere Halteebene bringt und unkompliziert und schnell von der Konsole genommen und gegen einen Adapter mit unterschiedlicher Höhe ausgetauscht werden kann. Dadurch ergibt sich die Möglichkeit, auch für unterschiedliche Bearbeitungsarten dieselben Werkstückhaltevorrichtungen zu verwenden, wodurch die Notwendigkeit entfällt, kostenintensiv eine geringe Stückzahl an speziell ausgestalteten Werkstückhaltevorrichtungen zu erzeugen. Ferner können die Werkstücke aufgrund des Adapters stabil in großer Höhe gehalten werden. Durch die Universalität des Adapters ist weiterhin gewährleistet, dass nahezu jede Bearbeitungsmaschine mit diesem ausgerüstet werden kann.

Weiter sind die Schnittstellen des Adapters derart ausgestaltet, dass die Adapter aufeinander stapelbar sind. Dadurch können in einer stabilen Konstruktion dennoch große Höhen auf der Konsole erreicht werden.

Bevorzugt ist die erste Verbindungsschnittstelle des Adapters formschlüssig befestigbar, was eine bessere Stabilisierung der Werkstückhaltevorrichtung ermöglicht. Durch die bessere Stabilisierung wird eine präzisere Bearbeitung ermöglicht, insbesondere auch bei Bearbeitungsschritten, bei denen Querkräfte auf das Werkstück wirken, wie beispielsweise bei einer Seitenbearbeitung oder auch einer Bearbeitung von unten durch eine 5-Achs-Bearbeitungsmaschine.

Vorzugsweise umfasst der lösbare Formschluss der ersten Schnittstelle einen Hebel und/oder einen Stift, wodurch eine mechanische Erhöhung des Kraftschlusses erreicht werden kann, was wiederum die Befestigung des Adapters an der Konsole sicherer und fester macht.

Ferner umfasst der Adapter bevorzugt eine Kraftübertragungseinheit zum Übertragen einer Haltekraft, mit der die Werkstückhaltevorrichtung ein Werkstück halten kann. Außerdem ist es weiter bevorzugt, dass eine Kraftübertragungseinheit zum Halten der Werkstückhaltevorrichtung vorgesehen ist, und/oder die Werkstückhaltevorrichtung formschlüssig auf dem Adapter befestigbar ist. Der Vorteil einer solchen Ausgestaltung liegt darin, dass auf externe Krafteinleitungsvorrichtungen, wie beispielsweise Schläuche für ein Vakuum oder ähnliches, verzichtet werden kann. Dadurch entsteht zum einen mehr Platz für die Bearbeitung des Werkstücks, zum anderen wird auch die Komplexität der Bearbeitungsmaschine selbst reduziert.

Die Kraftübertragungseinheit weist vorzugsweise eine Unterdruckkraft auf, mit der weiter bevorzugt auch das Werkstück gehalten wird, da eine solche Kraft besonders Werkstück schonend ist. Ferner ist es bevorzugt, dass der Adapter eine Befestigungssicherung aufweist, die die Befestigung des Adapters auf der Konsole, insbesondere im Betrieb der Werkzeughaltevorrichtung verstärkt. Dadurch wird abgesichert, dass sobald die Maschine in Betrieb ist, bzw. wenn sich ein Werkstück auf der Haltevorrichtung befindet, der Adapter äußerst fest und unverrückbar auf der Konsole sitzt.

Weiter vorzugsweise umfasst die Befestigungssicherung einen Kolben, der einen Durchgangskanal aufweisen kann. Ein Kolben selbst ist ein relativ einfach herzustellendes Element, in den ebenfalls recht einfach ein Durchgangskanal eingebracht werden kann.

Die Befestigungssicherung verstärkt den Formschluss vorzugsweise mittels eines Druckstiftes, da ein mechanischer Kraftschluss einfach zu realisieren, und dennoch äußerst sicher ist.

Bevorzugt weist der Adapter ferner einen Druckstift und einen Kolben mit einer Aussparung auf, die derart ausgebildet ist, dass im Betrieb der Werkstückhaltevorrichtung über den Druckstift auf einen Hebel, den die erste Schnittstelle umfasst, eine Kraft wirkt. Auf diese Weise werden verschiedene Elemente des Adapters miteinander kombiniert, so dass mehrere verschiedene Elemente funktional miteinander gekoppelt werden. Eine solche Befestigungssicherung ist aufgrund der einfachen Elemente vergleichsweise leicht und günstig herzustellen.

Bevorzugt weist der Bolzen in dem Adapter eine Rückstelleinrichtung auf, die vorzugsweise Federn umfasst. Die Rückstelleinrichtung ermöglicht es, den Bolzen automatisch in die Ausgangsposition zurückkehren zu lassen, so dass sich die Handhabung des Adapters für den Benutzer vereinfacht. Die Federn sind dafür gut geeignete und günstige Rückstellelemente.

Die Adapter sind bevorzugt derart an der Konsole befestigt, dass sie ohne entlang der Konsole bewegt zu werden und/oder in Befestigungsrichtung von der Konsole lösbar sind. Dadurch spart der Benutzer beim Austauschen der Adapter viel Zeit, da die Adapter direkt und ohne weitere Vorbereitung für eventuell nebenstehende Adapter, Werkstückhalteeinrichtungen, Endbefestigungen der Konsole, usw., abgenommen werden können.

Die erfindungsgemäßen Verfahren stellen im Wesentlichen die gleichen Vorteile wie die Produktansprüche bereit. Ein erfindungsgemäßes Verfahren umfasst das Bearbeiten eines Werkstücks, das von der Werkstückhaltevorrichtung in einer Halteebene gehalten wird, das Beenden der Bearbeitung des Werkstücks und das Befestigen eines ersten Adapters, so dass die Haltevorrichtung das Werkstück in einer anderen, bevorzugt höheren Ebene bearbeiten kann. Diese schnelle und einfache Montage des Adapters bedeutet eine enorme Zeitersparnis für den Benutzer der Bearbeitungsmaschine. Die Bearbeitungsmaschine muss nicht mehr umständlich umgerüstet werden, es reicht aus, dass nur noch eine baugleiche Werkstückhaltevorrichtung vorhanden ist und dennoch verschiedene Bearbeitungsarbeiten ausgeführt werden können. Dieselbe Flexibilität ist selbstverständlich auch vorhanden, wenn bereits ein Adapter auf der Konsole befestigt ist.

Vorzugsweise können die Adapter unmittelbar nach Beendigung der Bearbeitung abgenommen werden, ohne umständliche Vorbereitungen treffen zu müssen. Dies verkürzt weiter die Umrüstzeit.

Ferner ist der Adapter dazu geeignet, dass er auch entfernt werden kann, wenn die Werkstückhaltevorrichtung noch auf ihm befestigt ist oder gleichzeitig mit ihm entfernt wird. Dadurch kann in einigen Fällen, in denen andere Adapter mit jeweiligen Werkstückhaltevorrichtungen schon bereitgestellt sind, die Umrüstzeit weiter verkürzt werden.

### Kurze Beschreibung der Figuren

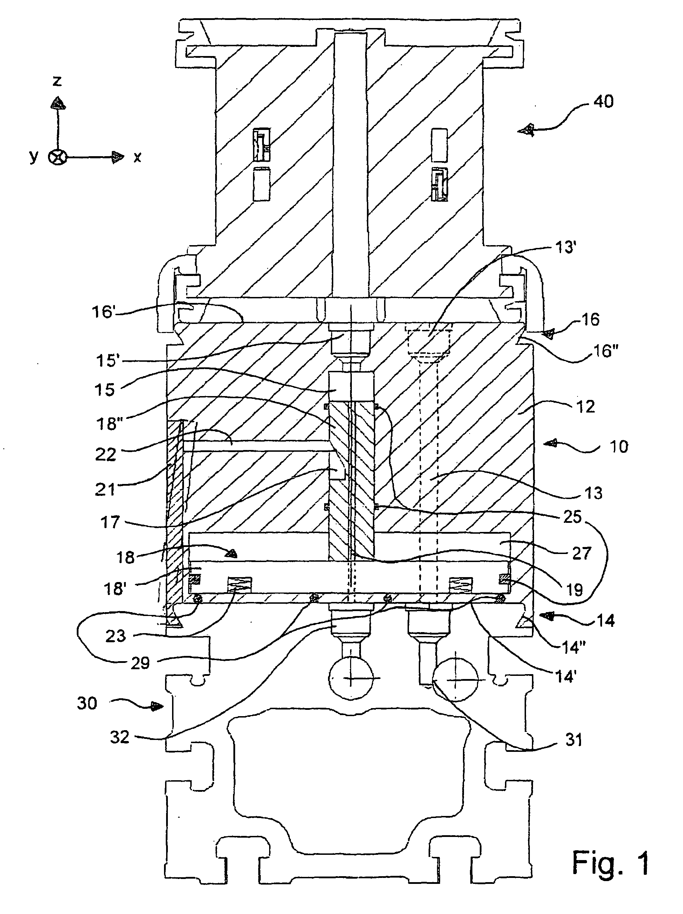

- Fig. 1: zeigt eine bevorzugte Ausführungsform der Erfindung in einer montierten Anordnung, d.h. an der Konsole befestigt und eine Werkstückhaltevorrichtung befestigend.

### Beschreibung der bevorzugten Ausführungsformen

Bevorzugte Ausführungsformen der vorliegenden Erfindung und Anregungen zu deren Ausgestaltung werden nachfolgend gegeben.

Im Folgenden werden die Richtungsbezeichnungen x, y, z eines kartesischen Koordinatensystems verwendet. Die x-Richtung geht dabei quer zur Konsole 30, die y-Richtung längs der Konsole 30 und die z-Richtung senkrecht zu den beiden ersten Richtungen (siehe Fig. 1).

Bevorzugt werden die erfindungsgemäßen Adapter an CNC-Bearbeitungsmaschinen eingesetzt, die eine oder mehrere Konsolen 30 aufweisen. Eine Konsole 30 ist dabei ein an der Bearbeitungsmaschine vorgesehenes Grundelement, auf der verschiedene Vorrichtungen, wie beispielsweise Werkstückhaltevorrichtungen, an verschiedenen Stellen längs der Konsole 30 (y-Richtung) befestigt werden können.

Ein erfindungsgemäßer Adapter 10, der in Fig. 1 gezeigt ist, besteht im Wesentlichen aus einem Hauptkörper 12, einer ersten Schnittstelle 14 und einer zweiten Schnittstelle 16. Der Hauptkörper 12 ist vorzugsweise aus Metall, kann aber auch aus Kunststoff hergestellt sein und ist weiter vorzugsweise einstückig mit den Schnittstellen 14, 16 ausgebildet. Der Hauptkörper 12 des Adapters kann eine beliebige Geometrie haben, ist bevorzugt jedoch derart ausgestaltet, dass er in y-Richtung wesentlich kürzer ausgebildet ist, als die Breite der Bearbeitungsmaschine, und somit auch als die Konsole 30, da diese in der Regel über die Gesamtbreite der Bearbeitungsmaschine geht. Im Beispiel aus Fig. 1 ist der Adapter im Wesentlichen rechtwinklig ausgebildet, allerdings kann jede beliebige geometrische Formgestaltung gegeben sein, solange die Stabilität des Adapters darunter nicht leidet.

Die Schnittstellen 14, 16 müssen grundsätzlich nur auf die Konsole 30 bzw. zu der Werkstückhaltevorrichtung passen. D.h. es ist keinerlei geometrische Vorgabe gemacht, wie die Schnittstellen auszubilden sind. Vorzugsweise weist aber eine erste Schnittstelle 14 einfach nur eine glatte Fläche 14' auf, mit der der Adapter auf der Konsole 30 liegen kann und dieser beispielsweise mittels eines Vakuums an die Konsole 30 gesaugt wird, so dass er an ihr haften bleibt. Auch eine magnetische Befestigung einer bevorzugt glatten Fläche 14' ist denkbar. Weiter vorzugsweise ist die Schnittstelle 14 jedoch derart ausgebildet, dass ein Formschlussabschnitt 14" vorhanden ist, der beispielsweise ein Schwalbenschwanzprofil hat.

Wie in Fig. 1 zu sehen ist, ist die glatte Fläche 14' der Schnittstelle 14 durch Dichtungen 29 abgetrennt. Dabei ist es vorzugsweise so, dass der Bereich auf der rechten Seite (in x-Richtung) mit dem Bereich auf der linken Seite des Adapters verbunden ist, so dass eine Kraft, wie beispielsweise der Unterdruck aus dem Kanal 31, auf eine möglichst große Fläche der Unterseite des Adapters 10, genauer gesagt auf die Schnittstelle 14, einwirken kann. Die Verbindung der beiden Bereiche kann bei Dichtungen 29, die längs der Außenkante des Adapters (x-y-Richtung) laufen und die einzelnen Bereiche in x-Richtung trennen (d.h. die Dichtungen laufen entlang der y-Richtung), durch einen Bypass geschehen. Diese Lösung nutzt die größtmögliche Fläche eines rechteckigen Adapters 10 am besten aus, so dass eine größere Kraft auf den Adapter wirkt. Eine andere Möglichkeit ist, dass die Dichtungen 29 kreisförmig ausgebildet sind, so dass die beiden Bereiche rechts und links eigentlich ein Bereich sind, der einen Kreisring um den zentralen Kreis an dem Kanal 32 ausbildet.

Die erste und die zweite Schnittstelle sind bevorzugt komplementär ausgebildet, d.h., dass sie derart ausgebildet sind, dass mehrere gleiche Adapter aufeinander gestapelt werden können und, im Idealfall, formschlüssig aufeinander befestigbar sind.

Die zweite Schnittstelle 16 kann grundsätzlich auch einfach aus einer glatten Fläche 16' bestehen, besitzt bevorzugt jedoch auch einen Formschlussabschnitt 16", der einen Formschluss mit der Werkstückhaltevorrichtung ermöglicht.

Der Formschluss zwischen erster Schnittstelle und Konsole 30 ist zumindest während der Bearbeitung fest, d.h. unbewegbar, vorzugsweise geschieht die unbewegliche Befestigung aber unmittelbar nach dem aufsetzen des Adapters auf die Konsole 30. Ein Verstellen des ausgerichteten Adapters wird dadurch verhindert.

Eine formschlüssige Verbindung mit der Konsole 30 ist bevorzugt so ausgestaltet, dass sie einfach zu lösen ist. Einfach bedeutet in diesem Zusammenhang beispielsweise das Drücken eines Knopfes, das Herausziehen eines Stifts, das Lösen eines Unterdrucks, das Drehen eines Reglers, das Verschieben eines Knopfes oder dergleichen mehr. Es ist sozusagen eine Ein-Handgriff-Lösung. Die formschlüssige Befestigung durch Verschrauben ist somit eher nachteilig, sofern es sich nicht um einen Schnellschraubverschluss handelt, der mit einem einfachen Handgriff zu lösen wäre.

In den Hauptkörper 12 sind bevorzugt zumindest ein oder zwei Kraftübertragungseinheiten eingebracht. Diese Kraftübertragungseinheiten können elektrische, mechanische oder auch magnetische Kraftübertragungseinheiten sein. Im bevorzugten Beispiel, das in Fig. 1 gezeigt ist, sind die Kraftübertragungseinheiten 13 und 15 jeweils zwei Durchgangskanäle, durch die ein Unterdruck oder auch ein Überdruck übertragen werden kann. Die in der Konsole 30 angeordneten Saug/Druckleitungen 31, 32 können dann ihre Saugkraft an die jeweiligen Durchgangskanäle 13, 15 weitergeben. Die erste Kraftübertragungseinheit 15 überträgt die Kraft, mit der die Werkstückhaltevorrichtung 40 das Werkstück halten kann, während die zweite Kraftübertragungseinheit 13 eine Kraft überträgt, mit der die Werkstückhaltevorrichtung auf dem Adapter gehalten wird. In den beiden Ausgangsstücken 13', 15' können Vorrichtungen vorgesehen sein, die eine Kraftübertragung erst dann erlauben, wenn sie auch notwendig ist. Im vorliegenden Beispiel wäre dies beispielsweise ein Ventil, bevorzugt ein Magnetventil, welches den Kanalausgang 13', 15' solange verschließt, bis eine Werkstückhaltevorrichtung auf den Adapter gesetzt ist. Die Magnetventile öffnen die jeweiligen Kanalausgänge 15', 13' wenn ein magnetischer Werkstoff, wie beispielsweise Metall, an der Schnittstelle 16 anliegt. Ebensolche Vorrichtungen wie das genannte Ventil können an den Auslassöffnungen der Kanäle 31, 32 im Adapter vorgesehen sein, oder es kann auch an den Kanaleingängen des Adapters jeweils eine Vorrichtung vorgesehen sein, die ein Ventil in den Kanälen 31, 32 der Konsole 30 öffnen kann. Eine elektrische Kraftübertragungseinheit wird im Wesentlichen einen Strom zur Erzeugung einer Magnetkraft, oder ein Signal zur Steuerung von bspw. elektro-mechanischen Bauteilen in der Werkstückhaltevorrichtung, wie einen Stellmotor, sein.

In der vorliegenden Ausführungsform wird der Formschluss durch einen Hebel 21 erreicht. Dieser Hebel kann an seinem in z-Richtung oberen Ende in den Adapter gedrückt werden, so dass sich um einen Drehpunkt auf seinem in z-Richtung unten liegenden Ende von der Konsole 30 wegbewegt und den Formschluss löst. Dieser Hebel ist bevorzugt nur auf einer Seite des Adapters vorgesehen, geht jedoch über die gesamte Breite des Formschlusses auf der jeweiligen Seite.

Der Hebel 21 hat ebenfalls eine Rückstelleinrichtung, wie beispielsweise eine, an seinem in z-Richtung oben liegenden Ende befindliche Feder (nicht gezeigt).

In dem Hauptkörper 12 des Adapters kann ferner ein Kolben 18 vorgesehen sein, der eine Kraftübertragungseinheit besitzen kann, im vorliegenden Fall einen Durchgangskanal 19. Der Kolben 18 ist in der vorliegenden Ausführungsform in der zweiten Kraftübertragungseinheit 15 vorgesehen und wird vorzugsweise in einer Ausführungsform verwendet, die mit Unterdruck arbeitet. Der Kolben 18 besitzt zwei Hauptteile 18', 18", die bevorzugt einstückig, aber auch mehrstückig ausgeführt werden können.

Ein unterer Teil des Kolbens 18' ist bevorzugt im Querschnitt symmetrisch ausgestaltet. Weiter besitzt er vorzugsweise auch eine Durchgangsaussparung für den ersten Durchgangskanal 13. Prinzipiell kann die Geometrie des untern Kolbenteils 18' aber beliebig gestaltet werden, solange eine ausreichend große Saugkraft auf die nach unten gerichtete Fläche wirken kann. Darauf wird bei der Erläuterung der Funktionsweise noch einmal eingegangen.

Ferner kann der untere Teil 18' des Kolbens 18 auch derart ausgebildet sein, dass er keinen Durchgangskanal für den Durchgangskanal 13 bereitstellt, d.h., dass der untere Teil des Kolbens zum Beispiel schmaler ist, als in Fig. 1 gezeigt. In einer anderen bevorzugten Ausführungsform des Kolbens ist der untere Teil 18' des Kolbens 18 Kreisförmig ausgestaltet, so dass bei einem rechteckigen Adapter ein oder auch mehrere Durchgangskanäle 13 in den Ecken (in einer x-y-Ebene) des Adapters vorgesehen sein können, ohne den Kolben zu beeinträchtigen.

In der Kolbenstange 18" kann ferner eine Aussparung 17 vorgesehen sein, die derart ausgebildet ist, dass sie es in einer ersten Stellung einem Metallstift 22 erlaubt, in die Aussparung 17 hineinzuragen, und in einer zweiten Stellung der Metallstift 22 aus der Aussparung 17 heraus geschoben wird. Vorzugsweise besitzen sowohl die Aussparung 17 als auch der Metallstift 22 dazu jeweils abgeschrägte Flächen, die aneinander abgleiten können, so dass der Stift 22 nach außen geschoben wird. Der Stift 22 sitzt in einem bevorzugt horizontalen Kanal 22, durch den auch alleine hydraulisch oder pneumatisch eine Kraft auf den Hebel aufgebracht werden kann. Der Metallstift 22 ist lediglich die bevorzugte Lösung.

Im unteren Kolbenteil 18' ist eine Rückstelleinrichtung 23 vorgesehen, die im vorliegenden Beispiel als Federn 23 ausgeführt sind. Um bei der Bewegung des Kolbens 18 so wenig Leckage wie möglich entstehen zu lassen, sind die Berührungsflächen des Kolbens mit den Innenwänden des Hauptkörpers 12 mittels Dichtungsringen 25 versiegelt. Im vorliegenden Beispiel sind in dem breiten unteren Teil 18' des Kolbens 18 ein Dichtungsring und in dem Durchgangskanal 15 jeweils über und unter der Aussparung Dichtungsringe 25 vorgesehen.

Im Folgenden wird die Funktion des Adapters 10 erst allgemein erklärt und dann anhand des speziellen Ausführungsbeispiels in Fig. 1.

Wenn der Adapter 10 auf die Konsole 30 aufgesetzt wird, wird er an der Konsole 30, vorzugsweise mittels eines Formschlusses und/oder eines Unterdrucks, befestigt. Solange noch keine Werkstückhaltevorrichtung auf dem Adapter sitzt, überträgt weder die erste noch die zweite Kraftübertragungseinheit eine Kraft an die Werkstückhaltevorrichtung. Wenn die Werkstückhaltevorrichtung 40 auf den Adapter 10 gesetzt wird, überträgt die zweite Kraftübertragungseinheit 13 eine Kraft an die Werkstückhaltevorrichtung 40, so dass diese auf dem Adapter festsitzt. Die erste Kraftübertragungseinheit 15 kann (aber muss nicht) schon jetzt eine Kraft übertragen, obwohl noch kein Werkstück auf der Werkstückhaltevorrichtung liegt. Es ist allerdings bevorzugt, dass der Kanal 32 erst dann eine Kraft, bzw. einen Unterdruck an die Kraftübertragungseinheit 15 abgeben kann, wenn sich auch ein Werkstück auf der Werkzeughaltevorrichtung befindet. Spätestens wenn ein Werkstück von der Werkstückhaltevorrichtung 40 gehalten werden soll, überträgt die erste Kraftübertragungseinheit 15 eine Kraft an die Werkstückhaltevorrichtung 40, so dass das Werkstück gehalten werden kann. Nach Beendigung der Bearbeitung des Werkstücks wird die Werkstückhaltevorrichtung 40 von dem Adapter genommen und dann der Adapter 10 von der Konsole 30, oder die Werkstückhaltevorrichtung 40 zusammen mit dem Adapter 10 von der Konsole 30 entfernt. Es können auch Adapter mit unterschiedlichen Größen vorgesehen sein, so dass ein Werkstück oder unterschiedliche Werkstücke durch den Austausch von Adaptern mit verschiedenen Größen auch in verschiedenen Höhen (z-Richtung) nacheinander zügig bearbeitet werden können.

Die Vorgehensweise in Fig. 1 ist analog dazu folgendermaßen. Der Hebel 21 wird an seinem oberen Ende eingedrückt, um den Adapter formschlüssig auf die Konsole 30 setzen zu können. Die Saugkanäle 31, 32 sind mit den jeweiligen Durchgangskanälen 13, 15 verbunden, und deren Ausgänge werden vorzugsweise durch Ventile blockiert. Sobald nun eine Saugkraft in den Saugkanälen 31, 32 aufgebracht wird, wird der Kolben 18 nach unten gezogen. Bei der konstruktiven Gestaltung des Kolbens 18 ist darauf zu achten, dass die Summe der Kräfte, die den Kolben 18 nach unten ziehen (bspw. Unterdruckkraft in der Kammer 27), größer ist, als die Summe der Kräfte, die den Kolben nach oben ziehen (bspw. Unterdruck am Kanalausgang 15' und Federkraft der Feder 23) In den über dem Kolbenteil 18' befindlichen Abschnitt der Kammer 27 kann Luft aus der Atmosphäre über einen Kanal (nicht gezeigt) ein- und ausfließen.

Durch das Nachuntenziehen des Kolbens wird der Stift 22 an der Schräge der Aussparung 17 außen gedrückt durch Abgleiten nach außen gedrückt und schiebt gegen das obere Ende des Hebels 21, der sich um seinen Drehpunkt dreht und den Formschluss mit der Konsole 30 mit großer Kraft absichert. Wenn nun die Werkstückhaltevorrichtung auf den Adapter gesetzt wird, öffnet sich der zweite Druckkanal 13, um die Werkstückhalteeinrichtung durch Unterdruck zu befestigen, d.h. an den Adapter anzusaugen. Auch die Kraftübertragungseinheit 15 bzw. der Druckkanal 15 überträgt seinen Unterdruck an die Werkstückhaltevorrichtung 40, kann dies aber auch erst zu dem Zeitpunkt, an dem das Werkstück von der Werkstückhaltevorrichtung gehalten werden soll. Weiterhin kann der Unterdruckkanal 32 auch erst dann eingeschaltet werden, wenn das Werkstück aufgelegt wird, so dass die Verstärkungswirkung des Hebels 21 auch erst beim Halten des Werkstücks auftritt.

Die Werkstückhaltevorrichtung sollte bzw. muss eine sein, die selbstständig funktionierend ist, und die bevorzugt auch selbst auf die Konsole 30 befestigt werden kann. So besteht ein Sauger beispielsweise aus einem Hauptkörper und einer oben liegenden Dämpfungsmatte aus Gummi, die dafür sorgt, dass die Werkstücke während des Haltens bzw. Ansaugens nicht beschädigt werden. Diese Gummimatte kann jedoch selbst nicht auf der Konsole 30 befestigt werden und ist auch nicht geeignet, ohne den Hauptkörper des Saugers ein Werkstück zu Halten oder Anzusaugen. Ferner können verschiedene Werkstückhaltevorrichtungen vorgesehen sein, wie beispielsweise eine mechanische Klemme, die auch mit Druck oder Unterdruck, oder über elektrische Signale eine mechanische Kraft erzeugen kann. Auch magnetische Halteeinheiten für Werkstücke aus Metall sind denkbar.

## Patentansprüche

1. Austauschbarer Adapter (10) zum Anbringen zwischen einer Werkstückhaltevorrichtung (40), die an einer Konsole (30) befestigbar ist, und der Konsole (30) einer Bearbeitungsmaschine für Werkstücke aus vorzugsweise Holz, Holzwerkstoff, Kunststoff oder dergleichen, umfassend:
- einen Hauptkörper (12), der vorzugsweise zumindest in einem Ausmaß geringer als die Konsole (30) ist, so dass die Konsole (30) über den Hauptkörper (12) hervorsteht;
- eine erste Verbindungsschnittstelle (14) an dem Hauptkörper mittels der der Adapter (10) auf der Konsole (30) befestigt wird;
eine zweite Verbindungsschnittstelle (16) an dem Hauptkörper mittels der die Werkstückhaltevorrichtung (40) auf dem Adapter (10) befestigt wird; wobei:
die erste und die zweite Verbindungsschnittstelle (14, 16) derart ausgeführt sind, dass zwei oder mehrere Adapter (10) stapelbar sind, und
- der Adapter (10) die Werkstückhaltevorrichtung (40) in eine andere, vorzugsweise höhere Halteebene bringt und unmittelbar nach dem Beenden des Betriebs der Werkstückhaltevorrichtung (40) einfach von der Konsole (30) genommen und gegen einen Adapter (10) mit unterschiedlicher Höhe ausgetauscht werden kann.

2. Adapter nach Anspruch 1, in der die erste Verbindungsschnittstelle (14) formschlüssig befestigbar ist, wobei der lösbare Formschluss (14") der ersten Schnittstelle bevorzugt einen Hebel (21) und/oder Stift aufweist.

3. Adapter nach einem der vorhergehenden Ansprüche, die ferner eine erste Kraftübertragungseinheit (15) zum Übertragen einer Haltekraft umfasst, mittels der die Werkstückhaltevorrichtung (40) ein Werkstück halten kann.

4. Adapter nach einem der vorhergehenden Ansprüche, die eine zweite Kraftübertragungseinheit (13) zum Halten der Werkstückhaltevorrichtung (40) umfasst und/oder die Werkstückhaltevorrichtung (40) formschlüssig auf dem Adapter (10) befestigbar ist.

5. Adapter nach einem der Ansprüche 4 oder 5, in der zumindest eine Kraftübertragungseinheit (13, 15) eine Unterdruckkraft aufweist.

6. Adapter nach einem der vorhergehenden Ansprüche, die ferner eine Befestigungssicherung aufweist, die die Befestigung des Adapters (10) auf der Konsole (30), insbesondere im Betrieb der Werkstückhaltevorrichtung (40), verstärkt, wobei die Befestigungssicherung bevorzugt einen Kolben (18) umfasst, der vorzugsweise einen Durchgangskanal (19) aufweist.

7. Adapter nach Anspruch 6 in Verbindung mit Anspruch 2, die ferner einen Druckstift (22) aufweist und die Befestigungssicherung mittels dieses Druckstiftes (22) den Formschluss (14") verstärken kann.

8. Adapter nach Anspruch 6 oder 7 in Verbindung mit Anspruch 2, der ferner einen Druckkanal (22) aufweist und in dem Kolben eine Aussparung derart ausgebildet ist, dass im Betrieb der Befestigungssicherung über den Druckkanal (22) eine Kraft auf den Hebel (21) wirkt.

9. Adapter nach einem der Ansprüche 6 bis 8, in der der Kolben eine Rückstelleinrichtung hat, die vorzugsweise Federn (23) aufweist.

10. Adapter nach einem der vorhergehenden Ansprüche, der lösbar ist, ohne entlang der Konsole (30) bewegt zu werden.

11. Adapter nach einem der vorhergehenden Ansprüche, der in Befestigungsrichtung von der Konsole (30) lösbar ist.

12. Verfahren zum Befestigen oder zum Austausch von Adaptern (10), die zwischen einer Werkstückhaltevorrichtung (40), die an einer Konsole (30) befestigbar ist, und der Konsole (30) angeordnet sind und die eine Höhenverstellung einer Werkstückhaltevorrichtung (40) zum Halten eines Werkstücks aus vorzugsweise Holz, Holzwerkstoff, Kunststoff oder dergleichen ermöglicht, wobei der Adapter eine erste und eine zweite Verbindungsschnittstelle (14, 16) aufweist, die derart ausgeführt sind, dass zwei oder mehrere Adapter (10) stapelbar sind, wobei das Verfahren folgende Schritte umfasst:
- Bearbeiten eines Werkstücks, das von der Werkstückhaltevorrichtung (40) in einer Halteebene gehalten wird;
- Beenden der Bearbeitung des Werkstücks;
- Befestigen eines ersten Adapters (10), so dass die Haltevorrichtung das Werkstück in einer anderen, bevorzugt höheren Ebene bearbeiten kann.

13. Verfahren nach Anspruch 12, in dem vor dem Befestigen des ersten Adapters (10) das Entfernen eines zweiten Adapters von der Konsole (30) erfolgt, wobei das Abnehmen des Adapters (10) bevorzugt unmittelbar nach Beendigung der Bearbeitung erfolgen kann.

14. Verfahren nach Anspruch 12 oder 13, in dem vor dem Abnehmen des Adapters (10) die Werkstückhaltevorrichtung (40) von dem Adapter entfernt wird oder die Werkstückhaltevorrichtung gleichzeitig mit dem Adapter entfernt wird.

## Claims

1. Exchangeable adapter (10) for mounting between a workpiece-holding device (40) which can be attached to a bracket (30), and the bracket (30) of a processing machine for workpieces preferably made of timber, derived timber products, plastic or the like, comprising:
- a main body (12) which is preferably at least in one dimension smaller than the bracket (30), so that the bracket (30) projects beyond the main body (12);
- a first connecting interface (14) on the main body by means of which the adapter (10) is attached to the bracket (30);
a second connecting interface (16) on the main body by means of which the workpiece-holding device (40) is attached to the adapter (10); wherein:
the first and second connecting interfaces (14, 16) are constructed in such a way that two or more adapters (10) can be stacked, and
- the adapter (10) brings the workpiece-holding device (40) into a different, preferably higher holding plane and immediately after completion of operation of the workpiece-holding device (40) can easily be taken off the bracket (30) and exchanged for an adapter (10) with a different height.

2. Adapter according to claim 1, in which the first connecting interface (14) can be attached in form-locking relationship, wherein the releasable form-locking means (14") of the first interface preferably has a lever (21) and/or pin.

3. Adapter according to any of the preceding claims, which further comprises a first force-transmitting unit (15) for transmitting a holding force by means of which the workpiece-holding device (40) can hold a workpiece.

4. Adapter according to any of the preceding claims, which comprises a second force-transmitting unit (13) for holding the workpiece-holding device (40) and/or the workpiece-holding device (40) can be attached to the adapter (10) in form-locking relationship.

5. Adapter according to either of claims 4 or 5, in which at least one force-transmitting unit (13, 15) has a partial pressure force.

6. Adapter according to any of the preceding claims, which further has an attachment locking means which strengthens the attachment of the adapter (10) to the bracket (30), in particular during operation of the workpiece-holding device (40), wherein the attachment locking means preferably comprises a piston (18) which preferably has a through-channel (19).

7. Adapter according to claim 6 in conjunction with claim 2, which further has a pressure pin (22) and the attachment locking means can strengthen the form-locking means (14") by means of this pressure pin (22).

8. Adapter according to claim 6 or 7 in conjunction with claim 2, which further has a pressure channel (22) and a recess is formed in the piston in such a way that, during operation of the attachment locking means, a force acts on the lever (21) via the pressure channel (22).

9. Adapter according to any of claims 6 to 8, in which the piston has a return device which preferably has springs (23).

10. Adapter according to any of the preceding claims, which is releasable without being moved along the bracket (30).

11. Adapter according to any of the preceding claims, which is releasable from the bracket (30) in the direction of attachment.

12. Method for attaching or for exchanging adapters (10) which are arranged between a workpiece-holding device (40) which can be attached to a bracket (30), and the bracket (30), and which enables height adjustment of a workpiece-holding device (40) for holding a workpiece preferably made of timber, derived timber products, plastic or the like, wherein the adapter has first and second connecting interfaces (14, 16) which are constructed in such a way that two or more adapters (10) can be stacked, wherein the method comprises the following steps:
- processing a workpiece which is held by the workpiece-holding device (40) in a holding plane;
- completing the processing of the workpiece;
- attaching a first adapter (10), so that the holding device can process the workpiece in a different, preferably higher plane.

13. Method according to claim 12, in which before attachment of the first adapter (10) the removal of a second adapter from the bracket (30) takes place, wherein removal of the adapter (10) can take place preferably immediately after completion of processing.

14. Method according to claim 12 or 13, in which before removal of the adapter (10) the workpiece-holding device (40) is removed from the adapter or the workpiece-holding device is removed at the same time as the adapter.

## Revendications

1. Adaptateur (10) échangeable, pour montage entre un dispositif de maintien de pièce (40), susceptible d'être fixé à une console (30), et la console (30) d'une machine d'usinage pour des pièces d'oeuvre de préférence en bois, matériau ligneux, matière synthétique ou analogue, comprenant :
- un corps principal (12), de préférence, au moins à un certain degré, plus petit que la console (30), de sorte que la console (30) ressort du corps principal (12) ;
- une première interface de liaison (14) sur le corps principal, au moyen de laquelle l'adaptateur (10) est fixé sur la console (30) ;
une deuxième interface de liaison (16) sur le corps principal, au moyen de laquelle le dispositif de maintien de pièce (40) est fixé sur l'adaptateur (10) ; où
la première et la deuxième interface (14, 16) sont réalisées de manière que deux adaptateurs (10) ou plus soient susceptibles d'être empilés, et
- l'adaptateur (10) place le dispositif de maintien de pièce (40) en un autre plan de maintien, de préférence plus élevé, et, directement après l'achèvement du fonctionnement du dispositif de maintien de pièce (40), est simplement retiré de la console (30) et peut être remplacé par un adaptateur (10) de hauteur différente.

2. Adaptateur selon la revendication 1, dans lequel la première interface de liaison (14) est susceptible d'être fixée par une liaison à ajustement de forme, la liaison à ajustement de forme (14") désolidarisable de la première interface présentant de préférence un levier (21) et/ou une tige.

3. Adaptateur selon l'une des revendications précédentes, comprenant en outre une première unité de transmission de force (15), pour la transmission d'une force de maintien, au moyen de laquelle le dispositif de maintien de pièce (40) peut maintenir une pièce d'oeuvre.

4. Adaptateur selon l'une des revendications précédentes, comprenant une deuxième unité de transmission de force (13) pour le maintien du dispositif de maintien de pièce (40) et/ou en ce que le dispositif de maintien de pièce (40) est susceptible d'être fixé, par une liaison à ajustement de forme, sur l'adaptateur (10).

5. Adaptateur selon l'une des revendications 4 ou 5, dans lequel au moins une unité de transmission de force (13, 15) présente une force imputable à un vide.

6. Adaptateur selon l'une des revendications précédentes, présentant en outre une sécurité de fixation, renforçant la fixation de l'adaptateur (10) sur la console (30), en particulier pendant que le dispositif de maintien de pièce (40) est en fonctionnement, la sécurité de fixation comprenant de préférence un piston (18) présentant de préférence un canal de passage (19).

7. Adaptateur selon la revendication 7, en liaison avec la revendication 2, présentant en outre une tige de pressage (22), et la sécurité de fixation pouvant renforcer la liaison à ajustement de forme (14") au moyen de cette tige de pressage (22).

8. Adaptateur selon la revendication ou 6 ou 7 en liaison avec la revendication 2, présentant en outre un canal à pression (22), et dans le piston étant réalisé un évidement, de manière que, pendant que la sécurité de fixation est en fonctionnement, une force agisse sur le levier (21) par l'intermédiaire du canal à pression (22).

9. Adaptateur selon l'une des revendications 6 à 8, dans lequel le piston présente un dispositif de rappel, comprenant de préférence des ressorts (23).

10. Adaptateur selon l'une des revendications précédentes, étant de nature désolidarisable, sans être déplacé le long de la console (30).

11. Adaptateur selon l'une des revendications précédentes, désolidarisable de la console (30), dans le sens de la fixation.

12. Procédé de fixation ou de remplacement d'adaptateurs (10), disposés entre un dispositif de maintien de pièce (40), susceptible d'être fixé à une console (30), et la console (30), et permettant un réglage en hauteur d'un dispositif de maintien de pièce (40) pour le maintien d'une pièce d'oeuvre de préférence en bois, matériau ligneux, matière synthétique ou analogue, l'adaptateur présentant un première et une deuxième interface (14, 16), réalisées de manière que deux adaptateurs (10) ou plus soient susceptibles d'être empilés, le procédé comprenant les étapes suivantes :
- usinage d'une pièce d'oeuvre, maintenue dans un plan de maintien par le dispositif de maintien de pièce (40) ;
- achèvement de l'usinage de la pièce d'oeuvre ;
- fixation d'un premier adaptateur (10), de manière que le dispositif de maintien puisse usiner la pièce d'oeuvre dans un autre plan, de préférence plus élevé.

13. Procédé selon la revendication 12, dans lequel, avant la fixation du premier adaptateur (10), l'enlèvement d'un deuxième adaptateur de la console (30) est effectué, l'enlèvement de l'adaptateur (10) pouvant s'effectuer de préférence directement après achèvement de l'usinage.

14. Procédé selon la revendication 12 ou 13, dans lequel, avant enlèvement de l'adaptateur (10), le dispositif de maintien de pièce (40) est enlevé de l'adaptateur, ou le dispositif de maintien de pièce est enlevé simultanément à l'adaptateur.
